# EUROPEAN PATENT APPLICATION

(11) **EP 2 896 673 A1**
(43) Date of publication of application: **22.07.2015**
(21) Application number: 12884461.0
(22) Date of filing: 11.09.2012
(51) Int. Cl.: C09K 11/59

(54) **SILICATE LUMINESCENT MATERIAL AND PREPARATION METHOD THEREOF**

(71) Applicant: Ocean's King Lighting Science&Technology Co., Ltd., Guangdong 518054 (CN); Shenzhen Ocean's King Lighting Engineering Co. Ltd., Guangdong 518054 (CN)
(72) Inventor: ZHOU, Mingjie, Shenzhen Guangdong 518054 (CN); WANG, Rong, Shenzhen Guangdong 518054 (CN)
(74) Representative: Michalski Hüttermann & Partner Patentanwälte mbB
(86) International application number: PCT/CN2012/081237
(87) International publication number: WO 2014/040220

(57) **Abstract**

The present invention relates to a silicate luminescent material and preparation method thereof. The silicate luminescent material has the following general chemical formula: (Ba_{1-y}A_{y})₂₋ₓSiO₄: Euₓ, D_{z}@Mₙ, wherein @ represents coating, Mn is a core, (Ba_{1-y}A_{y})₂₋ₓSiO₄: Euₓ, Dz is a shell; A is one or two of Sr, Ca, Mg or Zn; D is either F or Cl; M is at least one of Ag, Au, Pt, Pd and Cu metallic nanoparticles; the value range of x is 0.001<n≤1×10⁻². The silicate luminescent material is formed into a core-shell structure through the coating of metallic nanoparticles, thus effectively improving internal quantum efficiency of the luminescent material. In addition, the plasma effect on the surface of the metallic nanoparticles greatly improves luminous efficiency of the silicate luminescent material. The preparation method of the silicate luminescent material is simple, pollution free, easy to control, has low requirement for device, and is suitable for industrial production.

## Description

### FIELD OF THE INVENTION

The present disclosure relates to the field of luminescent materials technology, and more particularly relates to a silicate luminescent material and preparation method thereof.

### BACKGROUND OF THE INVENTION

White LED (light emitting diodes) has gain more and more attentions for the advantages such as high efficiency, long life, small size, fast response, non-polluting, and energy saving. One of the main approach to achieve white light is to use the combination of blue GaN chip and yellow YAG:Ce phosphor to produce white light. However, this method suffers from a disadvantage of a low color rendering index. Another method is to use near ultraviolet LED chip with red, green, and blue color phosphors to combine white light. This approach has been wildly studied and become the mainstream of development due to its high luminous efficiency, adjustable color temperature and high color rendering index. Therefore, LED tricolor phosphor excited by violet and near-ultraviolet has been extensively studied. Among them, the luminescent material based on the silicate system has gained widespread concern due to its rich source of raw materials, cheap price, extensive process adaptability, moderate synthesis temperature, high stability, and other advantages.

Alkaline earth metal orthosilicate luminescent material activated by divalent europium ion is a perfect green luminescent material. Compared with YAG luminescent materials, the alkaline earth metal orthosilicate luminescent material has a wider excitation spectrum and a better color purity. However, this luminescent material has some defects of low luminous efficiency, poor color rendering properties or the like.

### SUMMARY OF THE INVENTION

Accordingly, it is necessary to provide a silicate luminescent material having a higher luminous efficiency.

A silicate luminescent material is provided having the following chemical formula: (Ba_{1-y}A_{y})₂₋ₓSiO₄: Euₓ, D_{z}@Mₙ; wherein @ represents coating, M forms a core, (Ba_{1-y}A_{y})₂₋ₓSiO₄: Euₓ, D_{z} coats the M and forms a shell; A is at least one selected from the group consisting of Sr, Ca, Mg, and Zn, D is F or Cl, M is at least one nanoparticle selected from the group consisting of Ag, Au, Pt, Pd and Cu; 0.001<x≤0.15, 0<y≤0.5, 0≤z≤0.5; n is a molar ratio between M and Si in the silicate luminescent material, 0≤n≤1×10⁻².

In one embodiment, 0.005≤x≤0.10.

In one embodiment, 0.05≤y≤0.2.

In one embodiment, 0.01≤z≤0.2.

In one embodiment, 1×10⁻⁴≤n≤5×10⁻³.

In the silicate luminescent material, by encapsulating metal nanopaticles to form a core-shell structure, where M serves as the core and (Ba_{1-y}A_{y})₂₋ₓSiO₄: Euₓ, D_{z} serves as the shell, the internal quantum efficiency of the silicate is improved. In addition, the silicate luminescent material exhibits a greatly increased luminous efficiency without changing the wavelength of the emitted light under the same excitation conditions due to the surface plasma effect of metal nanoparticles. Compared with the conventional silicate luminescent material doped with europium, the silicate luminescent material described above exhibits many advantages such as high luminous efficiency, better color rendering characteristics, as well as good stability which is processed by the silicate luminescent material doped with europium.

A method of preparing a silicate luminescent material is provided including the following steps:

mixing and reacting a salt solution of metal M, an additive, and a reducing agent to obtain a sol containing M nanoparticles, wherein M is at least one nanoparticle selected from the group consisting of Ag, Au, Pt, Pd and Cu;

using Stöber method, adding a mixed solvent of ethanol and water, ammonia, and tetraethyl orthosilicate to the sol containing M nanoparticles according to a mole ratio of Si to M of n, stirring and reacting to obtain a sol containing SiO₂@Mₙ, wherein an outer layer of M nanoparticles is coated with SiO₂, drying and separating the sol containing SiO₂@Mₙ to obtain a SiO₂@Mₙ powder, wherein @ represents coating, 0<n≤1×10⁻²; and

weighing and mixing raw materials of Ba, A, Eu, and the SiO₂@Mₙ powder to obtain a mixture according to a mole ratio of Ba to A of (1-y):y and a mole ratio of the sum of the molar amounts of Ba and A to Eu and Si of (2-x):x:1, pretreating the mixture at a temperature of 600°C to 1000°C for 2 to 10 hours, then reducing the mixture at a temperature of 1000°C to 1400°C for 1 to 8 hours under a reducing atmosphere, cooling to obtain the silicate luminescent material having the following chemical formula: (Ba_{1-y}A_{y})₂₋ₓSiO₄: Euₓ, D_{z@}Mₙ; wherein M forms a core, (Ba_{1-y}A_{y})₂₋ₓSiO₄: Euₓ, D_{z} coats the M and forms a shell; A is at least one selected from the group consisting of Sr, Ca, Mg, and Zn, D is F or Cl, 0.001<x≤0.15, 0<y≤0.5, 0≤z≤0.5.

In one embodiment, the salt solution of the metal M is at least one salt solution selected from the group consisting of AgNO₃, AuCl₃·HCl·4H₂O, H₂PtCl₆·6H₂O, PdCl₂·2H₂O, and Cu(NO₃)₂.

In one embodiment, the additive is at least one selected from the group consisting of polyvinyl pyrrolidone, sodium citrate, cetyl trimethyl ammonium bromide, sodium lauryl sulfate, and sodium dodecyl sulfate; a concentration of additive in the sol containing M nanoparticles ranges from 1×10⁻⁴g/mL to 5×10⁻² g/mL;

the reducing agent is at least one selected from the group consisting of hydrazine hydrate, ascorbic acid, sodium citrate, and sodium borohydride; a mole ratio of the reducing agent to a metal ion in the salt solution of the metal M ranges from 3.6:1 to 18:1.

In one embodiment, the method further includes surface treating the M nanoparticles by adding an aqueous solution of polyvinyl pyrrolidone to the sol containing M nanoparticles, wherein the aqueous solution of polyvinyl pyrrolidone has a concentration in a range from 0.005g/mL to 0.1 g/mL.

In one embodiment, the raw material of Ba is at least one selected from the group consisting of carbonate, chloride, oxide, nitrate, acetate, and oxalate of Ba; the raw material of A is at least one selected from the group consisting of carbonate, chloride, oxide, nitrate, acetate, and oxalate of A; the raw material of Eu is at least one selected from the group consisting of carbonate, chloride, oxide, nitrate, acetate, and oxalate of Eu.

In the preparation method of the silicate luminescent material, the SiO₂@M is firstly prepared using a sol-gel method, then the silicate luminescent material coating metal nanoparticles (i.e. (Ba_{1-y}A_{y})₂₋ₓSiO₄: Euₓ, D_{z}@Mₙ) is prepared using the SiO₂@M as a source of silicon with compounds corresponding to Sr, A, and Eu via high-temperature solid-phase method, and the luminous efficiency of the silicate luminescent material is increased by coating the metal nanoparticles. The method is simple, low equipment requirements, no pollution, easy to control, and suitable for industrial production.

### BRIEF DESCRIPTION OF THE DRAWINGS

FIG. 1 is a flow chart of a method of preparing a silicate luminescent material in accordance with one embodiment;
FIG. 2 is a graphical representation of emission spectrums excited under a wavelength of 460nm, where curve 1 represents the emission spectrum of luminescent material Ba_{1.99}SiO₄:Eu_{0.01}:F_{0.1}@Ag_{2.5×10-4} coating Ag nanoparticels prepared in accordance with Example 4, and curve 2 represents the emission spectrum of the luminescent material of Ba_{1.99}SiO₄:Eu_{0.01}:F_{0.1} without coating Ag nanoparticles.

### DETAILED DESCRIPTION OF THE EMBODIMENTS

Reference will now be made to the drawings to describe, in detail, embodiments of the present silicate luminescent material and preparation method thereof.

An embodiment of a silicate luminescent material is provided having the following chemical formula: (Ba_{1-y}A_{y})₂₋ₓSiO₄: Euₓ, D_{z}@Mₙ; wherein @ represents coating, M forms a core, (Ba_{1-y}A_{y})₂₋ₓSiO₄: Euₓ, D_{z} coats the M and forms a shell; A is at least one selected from the group consisting of Sr, Ca, Mg, and Zn, D is F or Cl, M is at least one nanoparticle selected from the group consisting of Ag, Au, Pt, Pd and Cu. 0.001<x≤0.15, preferably 0.005≤x≤0.10. 0<y≤0.5, preferably 0.05≤y≤0.2. 0≤z≤0.5, preferably 0.01≤z≤0.2. n is a molar ratio between M and Si in the silicate luminescent material, 0≤n≤1×10⁻², preferably 1×10⁻⁴≤n≤5 ×10⁻³.

In the silicate luminescent material, by encapsulating metal nanopaticles to form a core-shell structure, where M serves as the core and (Ba_{1-y}A_{y})₂₋ₓSiO₄: Euₓ, D_{z} serves as the shell, the internal quantum efficiency of the silicate is improved. In addition, the silicate luminescent material exhibits a greatly increased luminous efficiency without changing the wavelength of the emitted light under the same excitation conditions due to the surface plasma effect of metal nanoparticles. Compared with the conventional silicate luminescent material doped with europium, the silicate luminescent material described above exhibits many advantages such as high luminous efficiency, better color rendering characteristics, as well as good stability which is processed by the silicate luminescent material doped with europium.

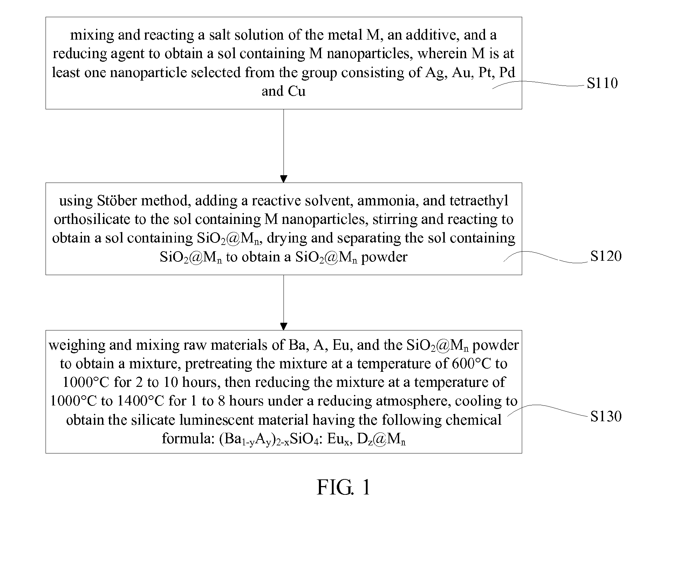

In addition, referring to FIG. 1, an embodiment of a method of preparing the silicate luminescent material is provided including the following steps:

In step S110, a salt solution of the metal M, an additive, and a reducing agent are mixed and reacted to obtain a sol containing M nanoparticles, where M is at least one nanoparticle selected from the group consisting of Ag, Au, Pt, Pd and Cu.

In the present embodiment, the salt solution of the metal M is at least one salt solution selected from the group consisting of AgNO₃,AuCl₃·HCl·4H₂O,H₂PtCl₆H₂O, PdCl₂·2H₂O, and Cu(NO₃)₂. The solvent is water or ethanol.

The additive is at least one selected from the group consisting of polyvinyl pyrrolidone (PVP), sodium citrate, cetyl trimethyl ammonium bromide, sodium lauryl sulfate, and sodium dodecyl sulfate. A concentration of additive in the sol containing M nanoparticles ranges from 1×10⁻⁴g/mL to 5×10⁻²g/mL. The reducing agent is at least one selected from the group consisting of hydrazine hydrate, ascorbic acid, sodium citrate, and sodium borohydride; a mole ratio of the reducing to a metal ion in the salt solution of the metal M ranges from 3.6:1 to 18:1.

Additionally, the present method further includes a step of surface treating the M nanoparticles by adding an aqueous solution of polyvinyl pyrrolidone to the sol containing M nanoparticles, where the aqueous solution of polyvinyl pyrrolidone has a concentration in a range from 0.005g/mL to 0.1 g/mL.

In step S120, according to the Stöber method, a mixed solvent of ethanol and water, ammonia, and tetraethyl orthosilicate are added to the sol containing M nanoparticles according to a mole ratio of Si to M of n. After stirring and reacting, a sol containing SiO₂@Mₙ is obtained, where an outer layer of M nanoparticles is coated with SiO₂. The sol containing SiO₂@Mₙ is dried and separated to obtain a SiO₂@Mₙ powder, where @ represents coating, 0<n≤1×10⁻².

In step S130, raw materials of Ba, A, Eu, and the SiO₂@Mₙ powder are weighed and mixed to obtain a mixture according to a mole ratio of Ba to A of (1-y):y and a mole ratio of the sum of the molar amounts of Ba and A to Eu and Si of (2-x):x:1. The obtained mixture is pretreated at a temperature of 600°C to 1000°C for 2 to 10 hours, then reduced the mixture at a temperature of 1000°C to 1400°C for 1 to 8 hours under a reducing atmosphere, cooled to obtain the silicate luminescent material having the following chemical formula: (Ba_{1-y}A_{y})₂₋ₓSiO₄: Euₓ, D_{z}@Mₙ; where M forms a core, (Ba_{1-y}A_{y})₂₋ₓSiO₄: Euₓ, D_{z} coats the M and forms a shell; A is at least one selected from the group consisting of Sr, Ca, Mg, and Zn, D is F or Cl, 0.001<x≤0.15, 0<y≤0.5, 0≤z≤0.5.

In the present embodiment, the raw material of Ba is at least one selected from the group consisting of carbonate, chloride, oxide, nitrate, acetate, and oxalate of Ba. The raw material of A is at least one selected from the group consisting of carbonate, chloride, oxide, nitrate, acetate, and oxalate of A. The raw material of Eu is at least one selected from the group consisting of carbonate, chloride, oxide, nitrate, acetate, and oxalate of Eu.

The reducing atmosphere is a N₂ and H₂ mixed gas atmosphere, CO reducing atmosphere or pure H₂ reducing atmosphere.

In the preparation method of the silicate luminescent material, the SiO₂@M is firstly prepared using a sol-gel method, then the silicate luminescent material coating metal nanoparticles (i.e. (Ba_{1-y}A_{y})₂₋ₓSiO₄: Euₓ, D_{z}@Mₙ) is prepared using the SiO₂@M as a source of silicon with compounds corresponding to Sr, A, and Eu via high-temperature solid-phase method, and the luminous efficiency of the silicate luminescent material is increased by coating the metal nanoparticles. The method is simple, low equipment requirements, no pollution, easy to control, and suitable for industrial production.

The specific examples are described below to illustrate the composition of the silicate luminescent material, the preparation method thereof, and the performance thereof.

### Example 1

This example describes a process of preparation of (Ba_{0.9}Sr_{0.2})_{1.85}SiO₄:Eu_{0.15},Cl_{0.20}@Pt_{1×10}-2 by using high-temperature solid-phase method.

Preparation of sol containing Pt nanoparticles was described below. 51.8mg of chloroplatinic acid (H₂PtCl₆•6H₂O) was dissolved in 17mL of deionized water. After the chloroplatinic acid was fully dissolved, 40.0mg of sodium citrate and 60.0mg of sodium lauryl sulfate were weighed and dissolved into the chloroplatinic acid aqueous solution under magnetic stirring. 1.9mg of sodium borohydride was weighed and dissolved into 10mL of deionized water to obtain 10 mL of sodium borohydride aqueous solution with a concentration of 5×10⁻³mol/L. 10mL of hydrazine hydrate solution (5×10⁻²mol/L) was prepared at the same time. Under magnetic stirring, 0.4mL of sodium borohydride solution was added dropwise to the chloroplatinic acid aqueous solution and stirred for 5 minutes, then 2.6mL of hydrazine hydrate (5×10⁻²mol/L) was added dropwise to the chloroplatinic acid aqueous solution. After reaction for 40 minutes, 10mL of sol containing Pt nanoparticles was obtained with a Pt content of 5×10⁻³ mol/L.

Treating of surfactant was described below. 10 mL of sol containing Pt nanoparticles (5×10⁻³mol/L) was pipetted and placed in a beaker, 4mL of PVP solution (0.02g/mL) was added, magnetically stirred for 18 hours to obtain a surface treated sol containing Pt nanoparticles.

Preparation of SiO₂@Pt_{1×10}-2 was described below. 25mL of absolute ethanol, 5mL of ammonia, and 1.2mL of tetraethylorthosilicate were added to the sol with stirring. After reaction of 8 hours, a solid phase material was obtained by centrifugation, the solid phase material was washed and dried to obtain SiO₂@Pt_{1×10}-2 powder.

Preparation of (Ba_{0.9}Sr_{0.1})_{1.85}SiO₄:Eu_{0.15},Cl_{0.20}@Pt_{1×10}-2 was described below. 1.2352g of barium carbonate (BaCO₃), 0.1092g of strontium carbonate (SrCO₃), 0.1452g of europium carbonate (Eu₂(CO₃)₃), 0.0832g of barium chloride (BaCl₂), and 0.2524g of SiO₂@Pt_{1×10}-2 powder were weighed and placed in an agate mortar, sufficient ground to form well mixed powder. The powder was firstly heated at 600°C for 10 hours, then sintered and reduced at 1300°C in a tube furnace under a CO reducing atmosphere for 1 hour, then cooled to room temperature to obtain silicate luminescent material of (Ba_{0.9}Sr_{0.1})_{1.85}SiO₄:Eu_{0.15},Cl_{0.20}@Pt_{1×10}-2 coating Pt nanoparticles.

### Example 2

This example describes a process of preparation of Ba_{1.99}SiO₄:Eu_{0.01@}Au_{5×10}-3 by using high-temperature solid-phase method.

Preparation of sol containing Au nanoparticles was described below. 10.3mg of chloroauric acid (AuCl₃ • HCl • 4H₂O) was dissolved in 16.8mL of deionized water. After the chloroauric acid was fully dissolved, 14mg of sodium citrate and 6mg of cetyl trimethyl ammonium bromide were weighed and dissolved into the chloroauric acid aqueous solution under magnetic stirring. 1.9mg of sodium borohydride and 17.6mg of ascorbic acid were weighed and dissolved into 10mL of deionized water, respectively, to obtain a 10mL of sodium borohydride solution with a concentration of 5×10⁻³mollL and a 10mL of ascorbic acid solution with a concentration of 1×10⁻²mol/L. Under magnetic stirring, 0.08mL of sodium borohydride solution was firstly added to the chloroauric acid aqueous solution, after stirring for 5 minutes, 3.12 mL of ascorbic acid solution with a concentration of 1×10⁻²mol/L was then added to the chloroauric acid aqueous solution. After reaction for 30 minutes, 20mL of sol containing Au nanoparticles was obtained with an Au content of 5×10⁻⁴mol/L.

Treating of surfactant was described below. 8 mL of sol containing Au nanoparticles (2.5×10⁻³mol/L) was pipetted and placed in a beaker, 2mL of PVP solution (0.1g/mL) was added, magnetically stirred for 8 hours to obtain a surface treated sol containing Au nanoparticles.

Preparation of SiO₂@Au_{5×10}-3 was described below. 20mL of absolute ethanol, 4mL of ammonia, and 1mL of tetraethylorthosilicate were added to the sol with stirring. After reaction of 3 hours, a solid phase material was obtained by centrifugation, the solid phase material was washed and dried to obtain SiO₂@Au_{5×10}-3 powder.

Preparation of Ba_{1.99}SiO₄:Eu_{0.01}@Au_{5×10}-3 was described below. 1.2205g of barium oxide (BaO), 0.0070g of europium oxide (Eu₂O₃), and 0.2524g of SiO₂@Au_{5×10}-3 powder were weighed and placed in an agate mortar, sufficient ground to form well mixed powder. The powder was firstly heated at 800°C for 4 hours, then sintered and reduced at 1000°C in a tube furnace under a 95%N₂+5%H₂ weak reducing atmosphere for 4 hours, then cooled to room temperature to obtain silicate luminescent material of Ba_{1.99}SiO₄:Eu_{0.01}@Au_{5×10}-3 coating Pt nanoparticles.

### Example 3

This example describes a process of preparation of (Ba_{0.5}Ca_{0.5})_{1.999}SiO₄:Eu_{0.001},F_{0.5}@Pd_{1×10}-5 by using high-temperature solid-phase method.

Preparation of sol containing Pd nanoparticles was described below. 0.22mg of palladium chloride (PdCl₂ • 2H₂O) was dissolved in 19mL of deionized water. After the palladium chloride was fully dissolved, 11.0mg of sodium citrate and 4.0mg of sodium lauryl sulfate were weighed and dissolved into the palladium chloride aqueous solution under magnetic stirring. 3.8mg of sodium borohydride was weighed and dissolved into 10mL of deionized water to obtain a sodium borohydride reducing solution with a concentration of 1×10⁻²mol/L. Under magnetic stirring, 1mL of sodium borohydride solution with a concentration of 1×10⁻²mol/L was fast added to the palladium chloride aqueous solution. After reaction for 20 minutes, 20mL of sol containing Pd nanoparticles was obtained with a Pd content of 5×10⁻⁵ mol/L.

Treating of surfactant was described below. 1.5 mL of sol containing Pd nanoparticles (5×10⁻⁵mol/L) was pipetted and placed in a beaker, 8mL of PVP solution (0.005g/mL) was added, magnetically stirred for 16 hours to obtain a surface treated sol containing Pd nanoparticles.

Preparation of SiO₂@Pd_{1×10}-5 was described below. 40mL of absolute ethanol, 8mL of ammonia, and 1.8mL of tetraethylorthosilicate were added to the sol with stirring. After reaction of 5 hours, a solid phase material was obtained by centrifugation, the solid phase material was washed and dried to obtain SiO₂@Pd_{1×10}-5 powder.

Preparation of (Ba_{0.5}Ca_{0.5})_{1.999}SiO₄:Eu_{0.001},F_{0.5}@Pd_{1×10}-5 was described below. 0.1958g of barium nitrate (Ba (NO₃)₂), 0.6560g of calcium nitrate (Ca(NO₃)₂), 0.0014g of europium nitrate (Eu(NO₃)₃), 0.1753g barium fluoride (BaF₂), and 0.2526g of SiO₂@Pd_{1×10}-5 powder were weighed and placed in an agate mortar, sufficient ground to form well mixed powder. The powder was firstly heated at 1000°C for 2 hours, then sintered and reduced at 1300°C in a tube furnace under a H₂ reducing atmosphere for 8 hours, then cooled to room temperature to obtain silicate luminescent material of (Ba_{0.5}Ca_{0.5})_{1.999}SiO₄:Eu_{0.001},F_{0.5}@Pd_{1×10}-5 coating Pt nanoparticles.

### Example 4

This example describes a process of preparation of Ba_{1.99}SiO₄:Eu_{0.01}:F_{0.1}@Ag_{2.5×10}-4 by using high-temperature solid-phase method.

Preparation of sol containing Ag nanoparticles was described below. 3.4mg of silver nitrate (AgNO₃) was dissolved in 18.4mL of deionized water. After the silver nitrate was fully dissolved, 42mg of sodium citrate was weighed and dissolved into the silver nitrate aqueous solution under magnetic stirring. 5.7mg of sodium borohydride was weighed and dissolved into 10mL of deionized water to obtain 10mL of sodium borohydride solution with a concentration of 1.5×10⁻² mol/L. Under magnetic stirring, 1.6mL of sodium borohydride solution (1.5×10⁻²mol/L) was added to the silver nitrate aqueous solution. After reaction for 10 minutes, 20mL of sol containing Ag nanoparticles was obtained with an Ag content of 1×10⁻³mol/L.

Treating of surfactant was described below. 1.2 mL of sol containing Ag nanoparticles (1×10⁻³mol/L) was pipetted and placed in a beaker, 10mL of PVP solution (0.01g/mL) was added, magnetically stirred for 12 hours to obtain a surface treated sol containing Ag nanoparticles.

Preparation of SiO₂@Ag_{2.5×10}-4 was described below. 30mL of absolute ethanol, 7.2mL of ammonia, and 1.2mL of tetraethylorthosilicate were added to the sol with stirring. After reaction of 6 hours, a solid phase material was obtained by centrifugation, the solid phase material was washed and dried to obtain SiO₂@Ag_{2.5×10}-4 powder.

Preparation of Ba_{1.99}SiO₄:Eu_{0.01}:F_{0.1}@Ag_{2.5×10}-4 was described below. 1.1898g of barium oxide (BaO), 0.0070g of europium oxide (Eu₂O₃), 0.0350g of barium fluoride (BaF₂), and 0.2524g of SiO₂@Ag_{2.5×10}-4 powder were weighed and placed in an agate mortar, sufficient ground to form well mixed powder. The powder was firstly heated at 800°C for 2 hours, then sintered and reduced at 1250°C in a tube furnace under a 95%N₂+5%H₂ weak reducing atmosphere for 4 hours, then cooled to room temperature to obtain silicate luminescent material of Ba_{1.99}SiO₄:Eu_{0.01}:F_{0.1}@Ag_{2.5×10}-4 coating Pt nanoparticles.

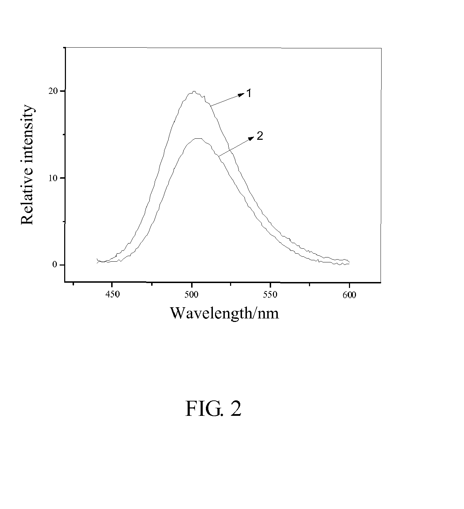

FIG. 2 is a graphical representation of emission spectrums of luminescent material Ba_{1.99}SiO₄:Eu_{0.01}:F_{0.1}@Ag_{2.5×10}-4 coating Ag nanoparticels prepared in accordance with Example 4 and the luminescent material of Ba_{1.99}SiO₄:Eu_{0.01}:F_{0.1} without coating Ag nanoparticles excited under a wavelength of 460nm. It can be seen from FIG. 2 that, at an emission peak of 505nm, the emission intensity of silicate luminescent material coating Ag nanoparticles is enhanced by 35% comparing to the silicate luminescent material without coating metal nanoparticles.

### Example 5

This example describes a process of preparation of (Ba_{0.8}Mg_{0.2})_{1.95}SiO₄:Eu_{0.05}@Ag_{5×10}-4 by using high-temperature solid-phase method.

Preparation of sol containing Ag nanoparticles was described below. 0.0429g of silver nitrate (AgNO₃), 0.0733g of sodium citrate, and 0.05g of PVP were weighed and formulated into 10mL of 0.025 mol/L of AgNO₃ aqueous solution, 10mL of 0.025 mol/L of sodium citrate aqueous solution, 10mL of 5mg/mL of PVP aqueous solution, respectively. 2mL of AgNO₃ aqueous solution was added into 30mL of deionized water, 4mL of PVP aqueous solution was then added with stirring. After the mixture solution was heated to 100°C, 4mL of sodium citrate aqueous solution was added dropwise and reacted for 15 minutes to obtain 40mL of sol containing Ag nanoparticles with a concentration of 1×10⁻³mol/L.

Treating of surfactant was described below. 5 mL of sol containing Ag nanoparticles (1×10⁻³mol/L) was pipetted and placed in a beaker, 6mL of PVP solution (0.06g/mL) was added, magnetically stirred for 15 hours to obtain a surface treated sol containing Ag nanoparticles.

Preparation of SiO₂@Ag_{5×10}-4 was described below. 35mL of absolute ethanol, 8mL of ammonia, and 1.5mL of tetraethylorthosilicate were added to the sol with stirring. After reaction of 2 hours, a solid phase material was obtained by centrifugation, the solid phase material was washed and dried to obtain SiO₂@Ag_{5×10}-4 powder.

Preparation of (Ba_{0.8}Mg_{0.2})_{1.95}SiO₄:Eu_{0.05}@Ag_{5×10}-4 was described below. 1.4062g of barium oxalate (BaC₂O₄), 0.1752g of magnesium oxalate (MgC₂O₄), 0.0567g of europium oxalate (Eu₂(C₂O₄)₃), and 0.2524g of SiO₂@Ag_{2.5×10}-4 powder were weighed and placed in an agate mortar, sufficient ground to form well mixed powder. The powder was firstly heated at 900°C for 5 hours, then sintered and reduced at 1150°C in a tube furnace under a 95%N₂+5%H₂ weak reducing atmosphere for 6 hours, then cooled to room temperature to obtain silicate luminescent material of (Ba_{0.8}Mg_{0.2})_{1.95}SiO₄:Eu_{0.05}@Ag_{5×10}-4 coating Pt nanoparticles.

### Example 6

This example describes a process of preparation of (Ba_{0.7}Sr_{0.2}Mg_{0.1})_{1.9}SiO₄:Eu_{0.1},Cl_{0.01}@Cu_{1×10}-4 by using high-temperature solid-phase method.

Preparation of sol containing Cu nanoparticles was described below. 1.6mg of copper nitrate was dissolved in 16mL of ethanol. After the copper nitrate was fully dissolved, 12mg of PVP was added with stirring. 0.4mg of sodium borohydride was dissolved into 10mL of ethanol to obtain a sodium borohydride alcoholic solution with a concentration of 1×10⁻³ mol/L. 4mL of sodium borohydride alcoholic solution was added dropwise to the copper nitrate solution. After stirring and reacting for 10 minutes, 20mL of sol containing Cu nanoparticles was obtained with a Cu content of 4×10⁻⁴mol/L.

Treating of surfactant was described below. 1.5 mL of sol containing Cu nanoparticles (4×10⁻⁴ mol/L) was pipetted and placed in a beaker, 5mL of PVP solution (0.03g/mL) was added, magnetically stirred for 10 hours to obtain a surface treated sol containing Cu nanoparticles.

Preparation of SiO₂@Cu_{1×10}-4 was described below. 15mL of absolute ethanol, 3mL of ammonia, and 1.4mL of tetraethylorthosilicate were added to the sol with stirring. After reaction of 4 hours, a solid phase material was obtained by centrifugation, the solid phase material was washed and dried to obtain SiO₂@Cu_{1×10}-4 powder.

Preparation of (Ba_{0.7}Sr_{0.2}Mg_{0.1})_{1.9}SiO₄:Eu_{0.1},Cl_{0.01}@Cu_{1×10}-4 was described below. 1.3537g of barium acetate (Ba(CH₃COO)₂), 0.3127g of strontium acetate (Sr(CH₃COO)₂), 0.1082g of magnesium acetate (Mg(CH₃COO)₂), 0.1316g of europium acetate (Eu(CH₃COO)₃), 0.0042g of barium chloride (BaCl₂), and 0.2524g of SiO₂@Cu_{1×10}-4 powder were weighed and placed in an agate mortar, sufficient ground to form well mixed powder. The powder was firstly heated at 700°C for 6 hours, then sintered and reduced at 1350°C in a tube furnace under a 95%N₂+5%H₂ weak reducing atmosphere for 6 hours, then cooled to room temperature to obtain silicate luminescent material of (Ba_{0.7}Sr_{0.2}Mg_{0.1})_{1.9}SiO₄:Eu_{0.1},Cl_{0.01}@Cu_{1×10}-4 coating Pt nanoparticles.

### Example 7

This example describes a process of preparation of (Ba_{0.95}Zn_{0.05})_{1.995}SiO₄:Eu_{0.005}@Pd_{3×10}-4 by using high-temperature solid-phase method.

Preparation of sol containing Pd nanoparticles was described below. 6.6mg of palladium chloride (PdCl₂ • 2H₂O) was dissolved in 19mL of deionized water. After the palladium chloride was fully dissolved, 11.0mg of sodium citrate and 4.0mg of sodium lauryl sulfate were weighed and dissolved into the palladium chloride aqueous solution under magnetic stirring. 3.8mg of sodium borohydride was weighed and dissolved into 10mL of deionized water to obtain a sodium borohydride reducing solution with a concentration of 1×10⁻²mol/L. Under magnetic stirring, 1mL of sodium borohydride solution with a concentration of 1×10⁻²mol/L was fast added to the palladium chloride aqueous solution. After reaction for 20 minutes, 20mL of sol containing Pd nanoparticles was obtained with a Pd content of 1.5×10⁻³mol/L.

Treating of surfactant was described below. 1.5 mL of sol containing Pd nanoparticles (5×10⁻⁵ mol/L) was pipetted and placed in a beaker, 8mL of PVP solution (0.005g/mL) was added, magnetically stirred for 16 hours to obtain a surface treated sol containing Pd nanoparticles.

Preparation of SiO₂@Pd_{3×10}-4 was described below. 40mL of absolute ethanol, 8mL of ammonia, and 1.8mL of tetraethylorthosilicate were added to the sol with stirring. After reaction of 5 hours, a solid phase material was obtained by centrifugation, the solid phase material was washed and dried to obtain SiO₂@Pd_{3×10}-4 powder.

Preparation of (Ba_{0.95}Zn_{0.05})_{1.995}SiO₄:Eu_{0.005}@Pd_{3×10}-4 was described below. 1.1624g of barium oxide (BaO), 0.0325g of zinc oxide (ZnO), 0.0035g of europium oxide (Eu₂O₃), and 0.2524g of SiO₂@Pd_{3×10}-4 powder were weighed and placed in an agate mortar, sufficient ground to form well mixed powder. The powder was firstly heated at 600°C for 8 hours, then sintered and reduced at 1400°C in a tube furnace under a CO reducing atmosphere for 3 hours, then cooled to room temperature to obtain silicate luminescent material of (Ba_{0.95}Zn_{0.05})_{1.995}SiO₄:Eu_{0.005}@Pd_{3×10}-4 coating Pt nanoparticles.

### Example 8

This example describes a process of preparation of Ba_{1.95}SiO₄:Eu_{0.05}@(Ag_{0.5}/Au_{0.5})_{1.25×10}-3 by using high-temperature solid-phase method.

Preparation of sol containing Ag_{0.5}/Au_{0.5} nanoparticles was described below. 6.2mg of chloroauric acid (AuCl₃•HCl•4H₂O) and 2.5mg of AgNO₃ were dissolved in 28mL of deionized water. After they were fully dissolved, 22mg of sodium citrate and 20mg of PVP were weighed and added to the mixture solution under magnetic stirring. 5.7mg of sodium borohydride was dissolved into 10mL of deionized water to obtain a sodium borohydride aqueous solution with a concentration of 1.5×10⁻²mol/L. 2mL of sodium borohydride aqueous solution (1.5×10⁻²mol/L) was added to the mixture solution under a magnetic stirring environment. After reacting for 20 minutes, 30mL of sol containing Ag/Au nanoparticles was obtained with a sum metal content of 1×10⁻³mol/L.

Treating of surfactant was described below. 1.5 mL of sol containing Ag_{0.5}/Au_{0.5} nanoparticles (1×10⁻³mol/L) was pipetted and placed in a beaker, 10mL of PVP solution (0.1g/mL) was added, magnetically stirred for 12 hours to obtain a surface treated sol containing Ag_{0.5}/Au_{0.5} nanoparticles.

Preparation of SiO₂@(Ag_{0.5}/Au_{0.5})_{1.25×10}-3 was described below. 30mL of absolute ethanol, 6mL of ammonia, and 1mL of tetraethylorthosilicate were added to the sol with stirring. After reaction of 5 hours, a solid phase material was obtained by centrifugation, the solid phase material was washed and dried to obtain SiO₂@(Ag_{0.5}/Au_{0.5})_{1.25×10}⁻³ powder.

Preparation of Ba_{1.95}SiO₄:Eu_{0.05}@(Ag_{0.5}/Au_{0.5})_{1.25×10}-3 was described below. 1.1959g of barium oxide (BaO), 0.0352g of europium oxide (Eu₂O₃), and 0.2524g of SiO₂@(Ag_{0.5}/Au_{0.5})_{1.25×10}-3 powder were weighed and placed in an agate mortar, sufficient ground to form well mixed powder. The powder was firstly heated at 800°C for 5 hours, then sintered and reduced at 1300°C in a tube furnace under a 95%+5%H₂ weak reducing atmosphere for 2 hours, then cooled to room temperature to obtain silicate luminescent material of Ba_{1.95}SiO₄:Eu_{0.05}@(Ag_{0.5}/Au_{0.5})_{1.25×10}-3 coating Pt nanoparticles.

Although the present invention has been described with reference to the embodiments thereof and the best modes for carrying out the present invention, it is apparent to those skilled in the art that a variety of modifications and changes may be made without departing from the scope of the present invention, which is intended to be defined by the appended claims.

## Claims

1. A silicate luminescent material having the following chemical formula:
(Ba_{1-y}A_{y})₂₋ₓSiO₄: Euₓ, D_{z}@Mₙ;
wherein @ represents coating, M forms a core, (Ba_{1-y}A_{y})₂₋ₓSiO₄: Euₓ, D_{z} coats the M and forms a shell; A is at least one selected from the group consisting of Sr, Ca, Mg, and Zn, D is F or Cl, M is at least one nanoparticle selected from the group consisting of Ag, Au, Pt, Pd and Cu; 0.001<x≤0.15, 0<y≤0.5, 0≤z≤0.5; n is a molar ratio between M and Si in the silicate luminescent material, 0<n≤1×10⁻².

2. The silicate luminescent material according to claim 1, wherein 0.005≤x≤0.10.

3. The silicate luminescent material according to claim 1, wherein 0.05≤y≤0.2.

4. The silicate luminescent material according to claim 1, wherein 0.01≤z≤0.2.

5. The silicate luminescent material according to claim 1, wherein 1×10⁻⁴≤n≤5×10⁻³.

6. A method of preparing a silicate luminescent material, comprising the following steps:
mixing and reacting a salt solution of metal M, an additive, and a reducing agent to obtain a sol containing M nanoparticles, wherein M is at least one nanoparticle selected from the group consisting of Ag, Au, Pt, Pd and Cu;
adding a mixed solvent of ethanol and water, ammonia, and tetraethyl orthosilicate to the sol containing M nanoparticles according to a mole ratio of Si to M of n, stirring and
reacting to obtain a sol containing SiO₂@Mₙ, wherein an outer layer of M nanoparticles is coated with SiO₂, drying and separating the sol containing SiO₂@Mₙ to obtain a SiO₂@Mₙ powder, wherein @ represents coating, 0<n≤1×10⁻²; and
weighing and mixing raw materials of Ba, A, Eu, and the SiO₂@Mₙ powder to obtain a mixture according to a mole ratio of Ba to A of (1-y):y and a mole ratio of the sum of the molar amounts of Ba and A to Eu and Si of (2-x):x:1, pretreating the mixture at a temperature of 600°C to 1000°C for 2 to 10 hours, then reducing the mixture at a temperature of 1000°C to 1400°C for 1 to 8 hours under a reducing atmosphere, cooling to obtain the silicate luminescent material having the following chemical formula: (Ba_{1-y}A_{y})₂₋ₓSiO₄: Euₓ, D_{z}@Mₙ; wherein M forms a core, (Ba_{1-y}A_{y})₂₋ₓSiO₄: Euₓ, D_{z} coats the M and forms a shell; A is at least one selected from the group consisting of Sr, Ca, Mg, and Zn, D is F or Cl, 0.001<x≤0.15, 0<y≤0.5, 0≤z≤0.5.

7. The method according to claim 6, wherein the salt solution of the metal M is at least one salt solution selected from the group consisting of AgNO₃, AuCl₃·HCl·4H₂O, H₂PtCl₆·6H₂O, PdCl₂·2H₂O, and Cu(NO₃)₂.

8. The method according to claim 6, wherein the additive is at least one selected from the group consisting of polyvinyl pyrrolidone, sodium citrate, cetyl trimethyl ammonium bromide, sodium lauryl sulfate, and sodium dodecyl sulfate; a concentration of additive in the sol containing M nanoparticles ranges from 1×10⁻⁴g/mL to 5×10⁻²g/mL;
the reducing agent is at least one selected from the group consisting of hydrazine hydrate, ascorbic acid, sodium citrate, and sodium borohydride; a mole ratio of the reducing agent to a metal ion in the salt solution of the metal M ranges from 3.6:1 to 18:1.

9. The method according to claim 6, further comprising surface treating the M nanoparticles by adding an aqueous solution of polyvinyl pyrrolidone to the sol containing M nanoparticles, wherein the aqueous solution of polyvinyl pyrrolidone has a concentration in a range from 0.005g/mL to 0.1 g/mL.

10. The method according to claim 6, wherein the raw material of Ba is at least one selected from the group consisting of carbonate, chloride, oxide, nitrate, acetate, and oxalate of Ba; the raw material of A is at least one selected from the group consisting of carbonate, chloride, oxide, nitrate, acetate, and oxalate of A; the raw material of Eu is at least one selected from the group consisting of carbonate, chloride, oxide, nitrate, acetate, and oxalate of Eu.
